# EUROPÄISCHE PATENTSCHRIFT

(11) **EP 3 065 199 B1**
(45) Veröffentlichungstag und Bekanntmachung des Hinweises auf die Patenterteilung: **31.01.2018**
(21) Anmeldenummer: 16000499.0
(22) Anmeldetag: 02.03.2016
(51) Int. Cl.: H01M 2/10

(54) **RÜCKENGETRAGENER AKKUPACK MIT EINER TRAGVORRICHTUNG**
BATTERY PACK CARRIED ON THE BACK HAVING A CARRYING DEVICE
BATTERIE PORTABLE SUR LE DOS DOTEE D'UN DISPOSITIF DE SUPPORT

(30) Priorität: 04.03.2015 DE 102015002720
(43) Veröffentlichungstag der Anmeldung: 07.09.2016
(73) Patentinhaber: Andreas Stihl AG & Co. KG, 71336 Waiblingen (DE)
(72) Erfinder: Wagner, Daniel, 73650 Winterbach (DE); Behringer, Patrick, 73760 Ostfildern (DE); Zeller, Markus, 73527 Schwäbisch Gmünd (DE); Maier, Alexander, 71336 Waiblingen (DE)
(74) Vertreter: Wasmuth, Rolf

(56) Entgegenhaltungen:
- WO-A2-2014/006905
- DE-A1-102004 001 551
- US-A1- 2008 251 550

## Beschreibung

Die Erfindung betrifft einen rückengetragenen Akkupack mit einem Akkupackgehäuses und einer Tragvorrichtung nach dem Oberbegriff des Anspruchs 1.

Aus der DE 10 2011 122 057 A1 ist ein rückengetragener Akkupack bekannt, wobei in dem Akkupackgehäuse eine Anordnung von wiederaufladbaren Akkuzellen auf genommen ist. Die Anordnung der im Akkupackgehäuses angeordneten Akkuzellen weist einen gemeinsamen elektrischen Anschluss auf, der im Kopfbereich des Akkupackgehäuses vorgesehen ist. An diesem elektrischen Anschluss ist eine Leitung anzuschließen, die zu einem äußeren elektrischen Verbraucher führt.

Das Akkupackgehäuses wird über eine Tragvorrichtung aus einer Rückenplatte und zumindest zwei Schultergurten auf dem Rücken eines Benutzers getragen, wobei die Rückenplatte mit einem oberen Schulterabschnitt und mit einem unteren Rückenabschnitt ausgebildet ist. Die Schultergurte sind mit einem oberen Ende im oberen Schulterabschnitt der Rückenplatte und mit einem unteren Ende im Bereich des unteren Rückenabschnitts der Rückenplatte festgelegt.

Der Verlauf der Leitung vom Akkupack zum elektrischen Verbraucher ist abhängig von dem verwendeten Arbeitsgerät und den auszuführenden Arbeiten und sollte so gelegt werden, dass der Benutzer in der Freiheit seiner Bewegungen nicht behindert oder eingeschränkt ist. Die DE 10 2011 122 057 A1 schlägt hierzu vor, im Akkupackgehäuse Führungskanäle für die Führung der Leitung vorzusehen, wobei die Leitungskanäle nur dann zugänglich sind, wenn der Akkupack von der Rückenplatte der Tragvorrichtung gelöst ist.

Die DE10 2004 001 551A1 offenbart einen elektrischen Antriebsmotor, der zusammen mit einem Akkupack von einem Benutzer mit einem Hüftgurt getragen ist. Der Elektromotor treibt eine biegsame Welle an, die über die Schulter eines Benutzers längs eines Schultergurtes zu einem Arbeitsgerät geführt ist.

Der Erfindung liegt die Aufgabe zugrunde, eine einfache elektrische Leitungsführung von einem rückengetragenen Akkupack zu einem elektrischen Verbraucher in einem Arbeitsgerät anzugeben, die vom Benutzer auch vor Ort leicht geändert und an wechselnde Arbeitsbedingungen angepasst werden kann.

Die Aufgabe wird erfindungsgemäß nach den Merkmalen des Anspruchs 1 gelöst.

Die Leitung wird durch eine Öffnung in der Rückenplatte in die Tragvorrichtung hineingeführt, so dass eine einfache Leitungsführung in der Tragvorrichtung ausgeführt werden kann. Zweckmäßig wird die Leitung von der Öffnung in der Rückenplatte zu einem Außenrand der Tragevorrichtung verlegt und längs eines Teilabschnittes des Außenrandes der Tragvorrichtung zum elektrischen Verbraucher **in einem Arbeitsgerät** weitergeführt. Dabei wird die **elektrische** Leitung zumindest im Bereich eines Teilabschnittes an dem Außenrand der Tragvorrichtung durch ein Befestigungselement lösbar festgelegt.

Ändern sich **für den Benutzer** die Arbeitsbedingungen, kann durch Lösen der Befestigungselemente die vorgehaltene **elektrische** Leitungsführung aufgehoben und auf eine für die aktuelle Arbeitsumgebung besser geeignete Leitungsführung gewechselt werden.

Vorteilhaft wird die durch die Öffnung in die Tragvorrichtung geführte **elektrische** Leitung zwischen den oberen Enden der Schultergurte zum Außenrand der Tragvorrichtung geführt. Dadurch ist ein nur kurzer Weg von der Öffnung zum Außenrand gegeben.

Ein sicherer Halt der Leitung wird dadurch erreicht, dass die Leitung im Abschnitt zwischen der Öffnung und dem Außenrand der Tragvorrichtung mit einem Befestigungselement an der Rückenplatte festgelegt ist.

Damit die Leitung den Benutzer nicht stört, ist vorgesehen, die Leitung zwischen Polstern der Rückenplatte zum Außenrand der Tragvorrichtung zu führen.

Der Außenrand der Tragvorrichtung wird einerseits durch den Rand der Rückenplatte gebildet; andererseits bilden auch die Schultergurte einen Außenrand der Tragvorrichtung. Insbesondere wird der Außenrand auch durch die von der Rückenplatte abgewandten Gurtseiten der Schultergurte gebildet.

Um eine einfache Leitungsführung entlang des Außenrandes der Rückenplatte zu gewährleisten ist vorgesehen, die Rückenplatte breiter als das Akkupackgehäuse auszuführen, so dass die Rückenplatte über die Seitenflächen des Akkupackgehäuses vorzugsweise geringfügig übersteht.

Durch die Leitungsführung über die Öffnung der Rückenplatte in die Tragvorrichtung hinein ist die Möglichkeit gegeben, das Akkupackgehäuse selbst in einfacher Weise durch eine Abdeckhaube gegen Feuchtigkeit und Schmutz zu schützen. Hierzu kann an der Rückenplatte eine Abdeckhaube befestigt sein, die das Akkupackgehäuse aufnimmt. Dabei ist zweckmäßig die Abdeckhaube am unteren, dem Rückenabschnitt der Rückenplatte benachbarten Ende offen, so dass zum Beispiel eine Standfläche des Akkupacks frei zugänglich bleibt.

Die Abdeckhaube ist zweckmäßig aus einem wasserabweisenden, flexiblen Material gebildet und über einen lösbaren, wasserabweisenden Verschluss an der Rückenplatte leicht austauschbar festgelegt.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Darstellung einen Akkupack mit einer Tragvorrichtung zum Tragen auf dem Rücken eines nicht dargestellten Benutzers,
- Fig. 2: eine perspektivische Darstellung auf die Tragvorrichtung nach Fig. 1,
- Fig. 3: eine Seitenansicht auf den Akkupack mit Tragvorrichtung,
- Fig. 4: eine Seitenansicht auf den Akkupack mit Tragvorrichtung nach Fig. 3 mit in Tragstellung dargestelltem und strichliert angedeutet eingeschwenktem Hüftabschnitt,
- Fig. 5: eine Seitenansicht auf einen auf dem Boden abgestellten Akkupack und eingeschwenktem Hüftabschnitt.

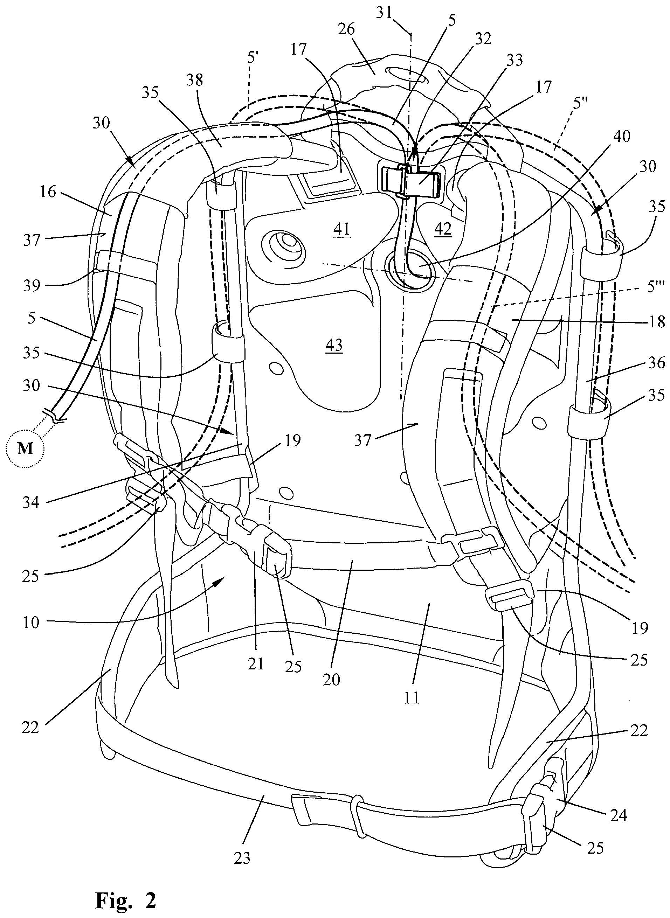

Der im Ausführungsbeispiel gezeigte rückengetragene Akkupack 1 weist ein Akkugehäuse 2 auf, in dem eine Anordnung von wiederaufladbaren Akkuzellen 3 vorgesehen ist, wie strichliert angedeutet. Die Anordnung der Akkuzellen 3 hat in einem Anschlusskasten einen gemeinsamen elektrischen Anschluss 4, an dem eine Leitung 5 (Fig. 2) zu einem äußeren elektrischen Verbraucher M angeschlossen ist. Die Leitung ist vorteilhaft als flexible Leitung ausgeführt. Können höhere Belastungen auftreten, kann die Leitung auch als Kabel ausgebildet sein. Der Akkupack 1 bzw. das Akkupackgehäuse 2 ist im Ausführungsbeispiel mit der Rückenplatte 6 einer Tragvorrichtung 10 fest verbunden; es kann zweckmäßig sein, die Rückenplatte 6 einteilig mit dem Akkupackgehäuse 2 auszubilden.

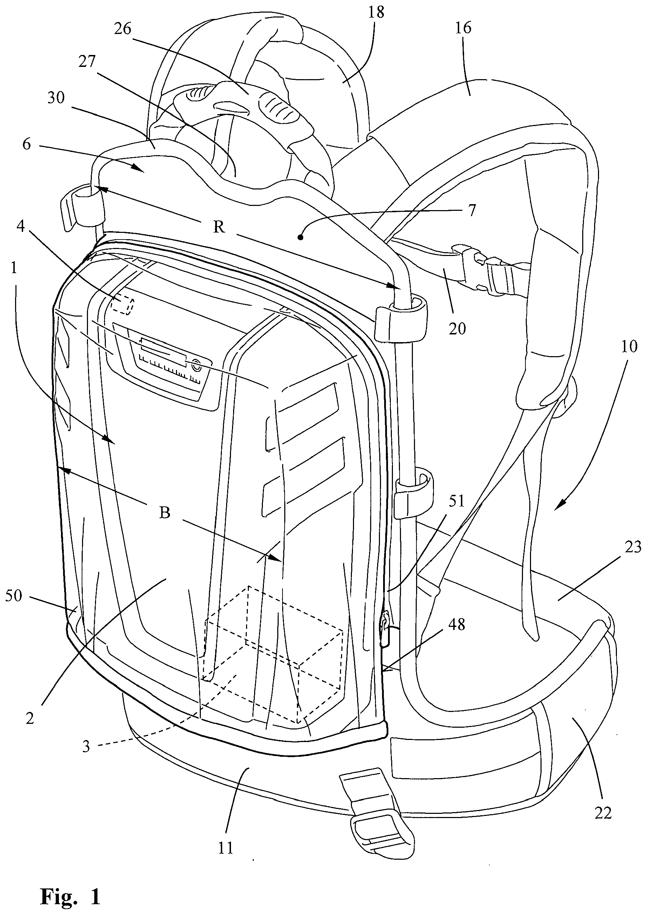

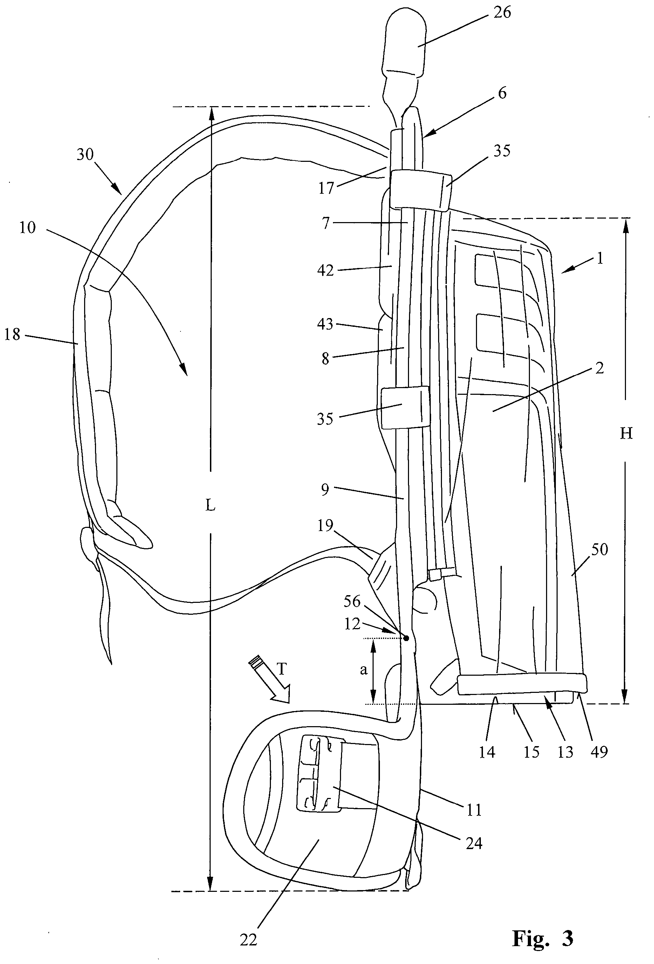

Wie Fig. 3 zeigt, erstreckt sich die Rückenplatte 6 in Hochrichtung von einem oberen Schulterabschnitt 7 über einen Mittelabschnitt 8 zu einem unteren Rückenabschnitt 9. Wie ferner in den Figuren 1 bis 5 dargestellt, ist im Ausführungsbeispiel die Rückenplatte 6 über den Rückenabschnitt 9 hinaus mit einem Hüftabschnitt 11 verlängert. Der Hüftabschnitt 11 schließt zweckmäßig über ein Textilscharnier, vorzugsweise über einen elastischen Gewebeabschnitt 12 an den Rückenabschnitt 9 an, so dass der Hüftabschnitt 11 relativ zur Rückenplatte 6 bzw. dessen Rückenabschnitt 9 um eine Bewegungsachse 56 beweglich ist. Die schwenkbare Anbindung des Hüftabschnitts 11 an den Rückenabschnitt 9 kann auch in anderer Weise erfolgen, z. B. durch ein Gelenk oder dgl.

Wie Fig. 3 zeigt, hat das etwa quaderförmige Akkupackgehäuse 2 eine Höhe H, die sich vom Schulterabschnitt 7 über den Mittelabschnitt 8 und den Rückenabschnitt 9 bis in den Hüftabschnitt 11 hinein erstreckt. Die Figuren 1 und 3 zeigen, dass der Schulterabschnitt 7 über das Akkupackgehäuse 2 nach oben übersteht; entsprechend ragt der Hüftabschnitt 11 über das untere Ende 13 des Akkupackgehäuses 2 hinaus.

Das untere Ende 13 des Akkupackgehäuses 2 bildet den Boden 14 des Akkupackgehäuses. Das untere Ende 13 kann derart gestaltet sein, dass das Akkupackgehäuse 2 eine äußere, vorzugsweise ebene Standfläche 15 ausbildet. Alternativ kann die Anbringung von Standfüßen vorteilhaft sein, deren Aufstandsflächen die Standfläche 15 definieren. Wie Fig. 3 zeigt, liegt die Bewegungsachse 56 im Bereich der Standfläche 15, zweckmäßig mit einem Abstand a oberhalb der Standfläche 15 des Akkupackgehäuses 2. Die Bewegungsachse 56 liegt mit größerem Abstand zum Boden 60 als die Standfläche 15. Das Textilscharnier bzw. der Gewebeabschnitt 12 liegt zweckmäßig mit Abstand a oberhalb der Standfläche 15.

Die Breite R (Fig. 1) der Rückenplatte 6 ist geringfügig breiter als die Breite B des Akkupackgehäuses 2, vorzugsweise 1 bis 5 cm breiter als die Breite B des Systemmoduls 1; die Höhe L (Fig. 3) der Rückenplatte 6 ist größer als die Höhe H des Akkupackgehäuses 2; die Höhe L der Rückenplatte 6 ist etwa 30% bis 70% länger als die Höhe H des Akkupackgehäuses 2.

Die Tragvorrichtung 10 für den rückengetragenen Akkupack 1 umfasst Schultergurte 16, 18, die mit ihren oberen Enden 17 im Bereich des oberen Schulterabschnittes 7 der Rückenplatte 6 festgelegt sind. Die unteren Enden 19 der Schultergurte 16, 18 sind im Bereich des unteren Rückenabschnitts 9 der Rückenplatte 6 befestigt.

Die Schultergurte 16, 18 sind über einen Brustgurt 20 miteinander zu verbinden; der Brustgurt 20 verläuft quer von der Mitte des einen Schultergurtes 16 zum anderen Schultergurt 18 und ist über ein Schloss 21 zu öffnen und zu schließen.

Der Hüftabschnitt 11 der Rückenplatte 6 weist zwei seitliche Hüftflossen 22 auf, die in Höhe der Hüfte eines Benutzers über einen Verbindungsgurt 23 und ein Schloss 24 zu schließen sind.

Die Schultergurte 16, 18, der Brustgurt 20 und der Verbindungsgurt 23 weisen ferner an sich bekannte Stellmittel 25 zur Längenanpassung der Gurte auf. Um den Akkupack 1 zusammen mit der Tragvorrichtung 10 einfach von Hand tragen zu können, ist im oberen Bereich des Schulterabschnittes 7 eine Griffschlaufe 26 festgelegt. Im Bereich der Griffschlaufe 26 weist der obere Außenrand 30 der Rückenplatte 6 eine mittige Einschnürung 27 auf.

Nach der Erfindung ist vorgesehen, die mit dem Anschluss 4 verbundene, insbesondere flexible Leitung 5 durch eine Öffnung 40 in der Rückenplatte 6 hindurchzuführen. Die Öffnung 40 ist in Fig. 2 als kreisrunde Öffnung ausgebildet; andere Formen der Öffnung 40 können zweckmäßig sein.

Die Öffnung 40 liegt vorteilhaft auf der Längsmittelachse 31 der Rückenplatte 6. Zweckmäßig liegt die Öffnung 40 im Übergangsbereich zwischen dem Schulterabschnitt 7 und dem Mittelabschnitt 8. Wie Fig. 1 zeigt, wird die Öffnung 40 vom Akkupackgehäuse 2 vollständig abgedeckt.

Die körperlich als flexible Leitung ausgeführte Leitung 5 ist durch die Öffnung 40 hindurch in die Tragvorrichtung 10 hineingeführt, wie Fig. 2 zeigt. Von der Öffnung 40 ist die Leitung 5 zweckmäßig zu einem Außenrand 30 der Tragvorrichtung 10 verlegt. Im Ausführungsbeispiel nach Fig. 2 verläuft die Leitung 5 längs der Längsmittelachse 31 zum oberen Außenrand 30 des Schulterabschnittes 7. Dabei liegt die Leitung 5 zwischen den oberen Enden 17 der Schultergurte 16, 18. Insbesondere ist die Leitung 5 zwischen der Öffnung 40 und dem Außenrand 30 der Tragvorrichtung 10 mit einem Befestigungselement 32 an der Rückenplatte 6 festgelegt. Das Befestigungselement 32 ist bevorzugt eine Schlaufe 33, die durch einen Klettverschluss leicht zu schließen und leicht zu öffnen ist.

Die Leitung 5 ist auf ihrem Weg zu einem schematisch dargestellten elektrischen Verbraucher M längs zumindest eines Teilabschnittes des Außenrandes 30 der Tragvorrichtung 10 weitergeführt, im Ausführungsbeispiel längs eines Teilabschnittes des oberen Außenrandes 30 des Schulterabschnittes 7. Auf Höhe des Schultergurtes 16 ist die Leitung 5 längs der äußeren Gurtseite 37 weitergeführt, wie in Fig. 2 in durchgezogenen Linien auf dem rechten Schultergurt 16 gezeigt ist. Die äußere Gurtseite 37 bildet einen weiteren Außenrand 30 der Tragvorrichtung 10. Die äußere Gurtseite 37 ist die Längsseite des Schultergurtes 16, die der Rückenplatte 6 abgewandt liegt. In Fig. 2 ist gezeigt, dass die Leitung 5 durch eine Manschette 38 geführt ist, die auf dem Schultergurt 16 gehalten ist. Es kann zweckmäßig sein, die Leitung 5 alternativ oder zusätzlich zur Manschette 38 mittels eines Befestigungsmittels 39 auf dem Schultergurt 16 festzulegen. Das Befestigungsmittel 39 ist zweckmäßig eine auf dem Schultergurt 16 aufgenähte Schlaufe mit einem Klettverschluss.

In einer ersten Alternative kann die Leitung 5' anstatt über den Schultergurt 16 längs der Hochkante 34 der Rückenplatte 6 geführt werden, wobei die Hochkante 34 einen Teil des Außenrandes der Tragvorrichtung 10 bildet. Über schlaufenartig ausgebildete Befestigungselemente 35 wird die Leitung 5' längs des Außenrandes 30 der Tragvorrichtung 10 geführt. Entsprechend wird die Leitung 5" in der dritten Alternative längs des gegenüberliegenden Außenrandes 30 geführt, wobei der Außenrand 30 durch die andere Hochkante 36 der Rückenplatte 6 gebildet ist.

Einen weiteren Außenrand 30 der Tragvorrichtung bildet auch die von der Rückenplatte 6 abgewandte Gurtseite 37 des weiteren Schultergurtes 18, auf der alternativ die Leitung bzw. das Kabel längs des linken Schultergurtes 18 geführt werden kann. In der gezeigten weiteren Alternative wird die Leitung 5"' vom Außenrand 30 des Schulterabschnitts 7 kommend, auf der der Rückenplatte 6 abgewandten Gurtseite 37 liegend längs des Schultergurtes 18 zum Verbraucher geführt. Hierbei kann die Leitung 5"' durch eine Manschette 38 auf der Gurtseite 37 gehalten sein oder durch leicht schließbare Befestigungsmittel 39, bevorzugt über mit dem Schultergurt 16, 18 vernähte Streifen eines Klettverschlusses.

Um dem Benutzer ein angenehmes Tragen des Akkupacks 1 auf dem Rücken zu ermöglichen, sind auf der Rückenplatte 6 Polster 41, 42, 43 vorgesehen, wie in Fig. 2 angedeutet. Zweckmäßig wird die Leitung 5 zwischen den Polstern 41 und 42 zum Außenrand 30 der Tragvorrichtung 10 verlegt. Die Höhe der Polster 41, 42, 43 ist dabei so gewählt, dass die als flexibles Kabel ausgeführte Leitung 5 zwischen den Polstern 41 und 42 versenkt geführt ist. Die Leitung 5 kann so nicht auf dem Rücken des Benutzers aufliegen.

Wie die Figuren 1 und 3 zeigen, ist der auf der Rückenplatte 6 befestigte Akkupack 1 durch eine Abdeckhaube 50 abgedeckt. Die Abdeckhaube 50 übergreift das Akkupackgehäuse 2 im Wesentlichen über die gesamte Höhe H; lediglich das dem Rückenabschnitt 9 benachbarte Ende 49 der Abdeckhaube 50 ist offen.

Die Abdeckhaube 50 besteht aus einem wasserabweisenden, flexiblen Material und wird mit einem Rand 48 an der Rückenplatte 6 festgelegt. Im Ausführungsbeispiel ist ein lösbarer, wasserabweisender Verschluss 51 der Abdeckhaube 50 mit der Rückenplatte 6 gezeigt; zweckmäßig ist dieser Verschluss als Reißverschluss ausgebildet, insbesondere als wasserdichter Reißverschluss.

Da die Leitung 5 durch die Öffnung 40 in der Rückenplatte nach innen in die Tragvorrichtung 10 geführt ist, kann die Abdeckhaube 50 in einfacher Weise gestaltet sein. Die Leitung 5 stört beim wassergeschützten Abdecken des Akkugehäuses 2 nicht.

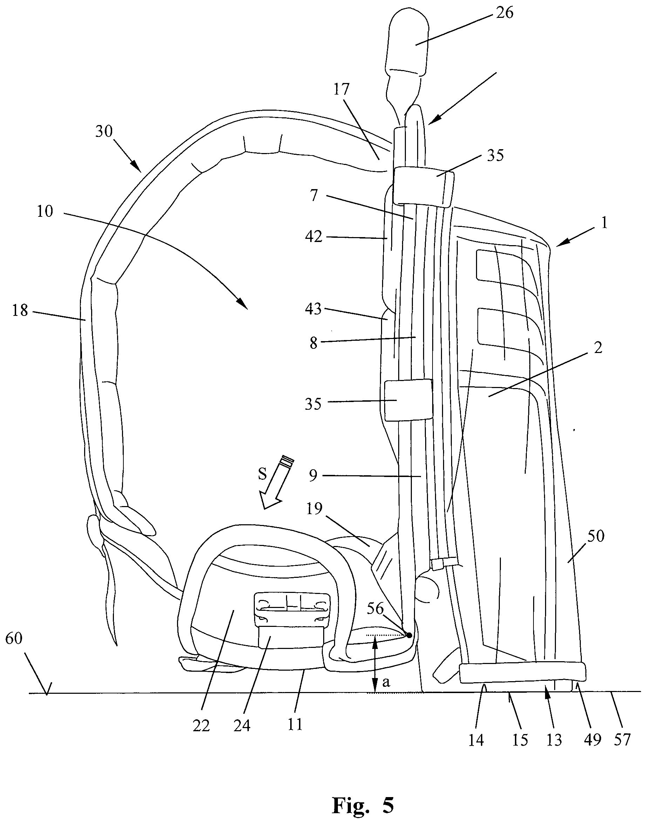

Wie vorstehend erläutert, weist das Akkupackgehäuse 2 einen Boden 14 mit einer Standfläche 15 auf, mit der das Akkupackgehäuse auf einem Boden 60 (Fig. 5) abgestellt werden kann. Die Standfläche 15 ist so gestaltet, dass der Akkupack 1 zusammen mit der Tragvorrichtung 10 auf dem Boden sicher aufrecht steht.

Die über den Rückenabschnitt 9 hinaus mit einem Hüftabschnitt 11 verlängerte Rückenplatte 6 ist so gestaltet, dass der Hüftabschnitt 11 zusammen mit seinen Seitenflossen 22 um die Bewegungsachse 56 in Pfeilrichtung 55 verschwenkt werden kann. Dabei bildet der Gewebeabschnitt 12 ein Textilscharnier und die Bewegungsachse 56, um die der Hüftabschnitt 11 relativ zum Rückenabschnitt 9 verschwenkbar ist.

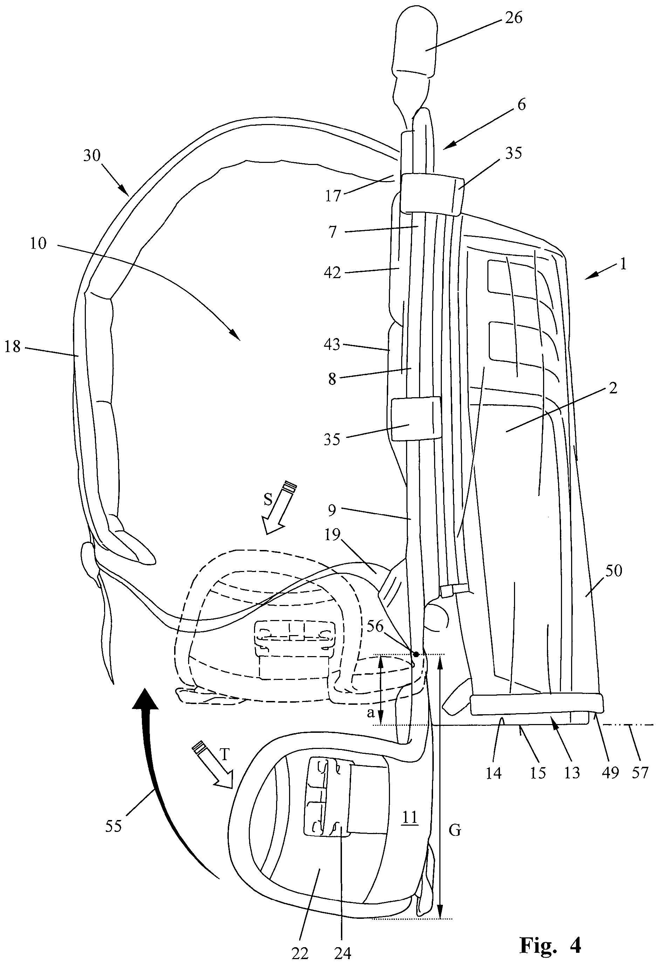

Wie in den Figuren 3 und 4 gezeigt, liegt die Bewegungsachse 56 mit einem Abstand a oberhalb der Standfläche 15. Von hinten auf das Akkupackgehäuse 2 gesehen, wird die Bewegungsachse 56 vom Akkupackgehäuse 2 überdeckt.

Die Bewegungsachse 56 verläuft parallel zur Ebene 57 der Standfläche 15. Es ist ausreichend, wenn sich die Bewegungsachse 56 etwa auf der Höhe der Standfläche 15 des Akkupackgehäuses 2 erstreckt.

Aus der Tragstellung T gemäß Fig. 3 lässt sich der Hüftabschnitt 11 in Pfeilrichtung 55 um die Bewegungsachse 56 in die Schwenkstellung S schwenken; entgegen der Pfeilrichtung 55 wird der Hüftabschnitt 11 in der Tragstellung T gegen das Akkupackgehäuse 2 abgestützt. Eine stabile Abstützung wird erreicht, wenn der Abstand a ausreichend groß gewählt ist; im gezeigten Ausführungsbeispiel beträgt der Abstand a etwa 10% bis 30% der Höhe G des Hüftabschnittes 11.

In Pfeilrichtung 55 kann der Hüftabschnitt 11 über die Ebene 57 der Standfläche 15 hinaus um etwa 90° in die Schwenkstellung S bewegt werden; in dieser Schwenkstellung S liegt - bedingt durch den Abstand a der Bewegungsachse 56 zur Standfläche 15 - der Hüftabschnitt 11 oberhalb der Ebene 57 der Standfläche 15. Dadurch kann - wie Fig. 5 zeigt - der Akkupack 1 zusammen mit der Tragvorrichtung 10 ohne Beeinträchtigung durch den Hüftabschnitt 11 sicher auf den Boden 60 abgestellt werden. Aufgrund des Abstandes a der Bewegungsachse 56 zur Standfläche 15 ist ferner gewährleistet, dass der in die Schwenkstellung S verschwenkbare Hüftabschnitt 11 in Schwenkstellung S mit Abstand zum Boden 60 liegt. Ein sicherer aufrechter Stand des Akkupacks 1 zusammen mit der Tragvorrichtung 10 auf dem Boden 60 ist gewährleistet.

## Patentansprüche

1. Rückengetragener Akkupack (1) mit einem Akkupackgehäuses (2),
1.1: wobei in dem Akkupackgehäuse (2) eine Anordnung von wiederaufladbaren Akkuzellen (3) aufgenommen ist,
1.2: und die Anordnung der Akkuzellen (3) mit einem gemeinsamen elektrischen Anschluss (4) ausgebildet ist,
1.3: an dem eine Leitung (5) zu einem äußeren elektrischen Verbraucher (M) **in einem Arbeitsgerät** angeschlossen ist,
1.4: und das Akkupackgehäuse (2) eine Tragvorrichtung (10) aus zumindest einer Rückenplatte (6) und mindestens einem Schultergurt (16, 18) aufweist,
1.5: wobei die Rückenplatte (6) mit einem oberen Schulterabschnitt (7) und mit einem unteren Rückenabschnitt (9) ausgebildet ist,
1.6: und ein Schultergurt (16, 18) mit einem oberen Ende (17) im oberen Schulterabschnitt (7) der Rückenplatte (6) und mit einem unteren Ende (19) im Bereich des unteren Rückenabschnitts (9) der Rückenplatte (6) festgelegt ist,
**dadurch gekennzeichnet,**
1.7: dass die Leitung (5, 5', 5", 5"') durch eine Öffnung (40) in der Rückenplatte (6) hindurch in die Tragvorrichtung (10) hinein geführt ist,
1.8: dass die Leitung (5, 5', 5", 5"') von der Öffnung (40) in der Rückenplatte (6) zu einem Außenrand (30) der Tragvorrichtung (10) verlegt ist
1.9: und längs zumindest eines Teilabschnittes des Außenrandes (30) der Tragvorrichtung (10) weitergeführt, ist,
1.10: und dass die Leitung (5, 5', 5", 5"') mit zumindest einem Befestigungselement (35) im Bereich des Teilabschnittes an dem Außenrand (30) der Tragvorrichtung (10) lösbar festgelegt ist.

2. Akkupack nach Anspruch 1,
**dadurch gekennzeichnet, dass** die Leitung (5, 5', 5") zwischen den oberen Enden (17) der Schultergurte (16, 18) zum Außenrand (30) der Tragvorrichtung (10) geführt ist.

3. Akkupack nach Anspruch 1,
**dadurch gekennzeichnet, dass** die Leitung (5, 5', 5") zwischen der Öffnung (40) und dem Außenrand (30) der Tragvorrichtung (10) mit einem Befestigungselement (32) an der Rückenplatte (6) festgelegt ist.

4. Akkupack nach Anspruch 1,
**dadurch gekennzeichnet, dass** die Leitung (5, 5', 5") zwischen Polstern (41, 42) der Rückenplatte (6) zum Außenrand (30) der Tragvorrichtung (10) geführt ist.

5. Akkupack nach Anspruch 1,
**dadurch gekennzeichnet, dass** der Außenrand (30) der Tragvorrichtung (10) durch den Rand der Rückenplatte (6) gebildet ist.

6. Akkupack nach Anspruch 1,
**dadurch gekennzeichnet, dass** der Außenrand (30) der Tragvorrichtung (10) durch die der Rückenplatte (6) abgewandte Gurtseite (37) eines Schultergurtes (16, 18) gebildet ist.

7. Akkupack nach Anspruch 1,
**dadurch gekennzeichnet, dass** die Rückenplatte (6) über die Seitenränder des Akkupackgehäuse (2) übersteht.

8. Akkupack nach Anspruch 1,
**dadurch gekennzeichnet, dass** das Befestigungselement (35) als eine durch einen Klettverschluss zu schließende Schlaufe ausgebildet ist.

9. Akkupack nach Anspruch 1,
**dadurch gekennzeichnet, dass** auf der Rückenplatte (6) eine Abdeckhaube (50) befestigt ist, die das Akkupackgehäuse (2) aufnimmt.

10. Akkupack nach Anspruch 9,
**dadurch gekennzeichnet, dass** die Abdeckhaube (50) am unteren, dem Rückenabschnitt (9) benachbarten Ende (49) offen ist.

11. Akkupack nach Anspruch 9,
**dadurch gekennzeichnet, dass** die Abdeckhaube (50) aus einem wasserabweisenden, flexiblen Material besteht.

12. Akkupack nach Anspruch 9,
**dadurch gekennzeichnet, dass** die Abdeckhaube (50) über einen lösbaren, wasserabweisenden Verschluss (51) an der Rückenplatte (6) befestigt ist.

## Claims

1. Back-mounted battery pack (1) with a battery pack housing (2),
1.1: wherein an arrangement of rechargeable battery cells (3) is accommodated in the battery pack housing (2),
1.2: and the arrangement of rechargeable battery cells (3) is designed with a common electric connection (4),
1.3: to which is connected a line (5) to an external electric load (M) in a working implement,
1.4: and the battery pack housing (2) comprises a carrying device (10) composed of at least one back plate (6) and at least one shoulder belt (16, 18),
1.5 wherein the back plate (6) is designed with an upper shoulder section (7) and a lower back section (9),
1.6: and a shoulder belt (16, 18) is fixed with an upper end (17) in the upper shoulder section (7) of the back plate (6) and with a lower end (19) in the region of the lower back section (9) of the back plate (6),
**characterised in that**
1.7: the line (5, 5', 5", 5"') is routed into the carrying device (10) through an opening (40) in the back plate (6),
1.8: the line (5, 5', 5", 5"') is routed from the opening (40) in the back plate (6) to an outer edge (30) of the carrying device (10)
1.9: and routed onwards along at least a sub-section of the outer edge (30) of the carrying device (10),
1.10: and the line (5, 5', 5", 5"') is releasably fixed to the outer edge (30) of the carrying device (10) with at least one fastening element (35) in the region of the sub-section.

2. Battery pack according to claim 1,
**characterised in that** the line (5, 5', 5") is routed between the upper ends (17) of the shoulder belts (16, 18) to the outer edge (30) of the carrying device (10).

3. Battery pack according to claim 1,
**characterised in that** the line (5, 5', 5") is fixed to the back plate (6) with a fastening element (32) between the opening (40) and the outer edge (30) of the carrying device (10).

4. Battery pack according to claim 1,
**characterised in that** the line (5, 5', 5") is routed to the outer edge (30) of the carrying device (10) between cushions (41, 42) of the back plate (6).

5. Battery pack according to claim 1,
**characterised in that** the outer edge (30) of the carrying device (10) is represented by the edge of the back plate (6).

6. Battery pack according to claim 1,
**characterised in that** the outer edge (30) of the carrying device (10) is represented by that belt side (37) of a shoulder belt (16, 18) which is remote from the back plate (6).

7. Battery pack according to claim 1,
**characterised in that** the back plate (6) projects beyond the lateral edges of the battery pack housing (2).

8. Battery pack according to claim 1,
**characterised in that** the fastening element (35) is designed as a tab which can be closed by a Velcro fastener.

9. Battery pack according to claim 1,
**characterised in that** a covering hood (50) accommodating the battery pack housing (2) is mounted on the back plate (6).

10. Battery pack according to claim 9,
**characterised in that** the covering hood (50) is open at the lower end (29) adjacent to the back section (9).

11. Battery pack according to claim 9,
**characterised in that** the covering hood (50) is made of a water-repellent flexible material.

12. Battery pack according to claim 9,
**characterised in that** the covering hood (50) is mounted on the back plate (6) by way of a releasable water-repellent fastener (51).

## Revendications

1. Batterie portée sur le dos (1) avec un boîtier de batterie (2),
1.1: un dispositif d'éléments de batterie rechargeables (3) étant logé dans le boîtier de batterie (2),
1.2: et le dispositif des éléments de batterie (3) étant pourvu d'un raccordement électrique commun (4)
1.3: au niveau duquel une ligne (5) est raccordée à un consommateur électrique extérieur (M) dans un appareil,
1.4: et le boîtier de batterie (2) comportant un dispositif de support (10) composé d'au moins une plaque dorsale (6) et d'au moins une bretelle (16, 18),
1.5: la plaque dorsale (6) étant pourvue d'une partie supérieure pour les épaules (7) et d'une partie inférieure pour le dos (9),
1.6: et une f (16, 18) étant fixée avec une extrémité supérieure (17) dans la partie supérieure pour les épaules (7) de la plaque dorsale (6), et avec une extrémité inférieure (19) dans la zone de la partie inférieure pour le dos (9) de ladite plaque dorsale (6),
**caractérisée**
1.7: en ce que la ligne (5, 5', 5", 5'") est introduite dans le dispositif de support (10) par une ouverture (40) prévue dans la plaque dorsale (6),
1.8: en ce que la ligne (5, 5', 5", 5'") est posée de l'ouverture (40) prévue dans la plaque dorsale (6) jusqu'à un bord extérieur (30) du dispositif de support (10),
1.9: puis longe au moins une partie du bord extérieur (30) du dispositif de support (10),
1.10: et en ce que la ligne (5, 5', 5", 5"') est fixée de manière amovible au bord extérieur (30) du dispositif de support (10) dans la zone de ladite partie à l'aide d'au moins un élément de fixation (35).

2. Batterie selon la revendication 1,
**caractérisée en ce que** la ligne (5, 5', 5") est amenée entre les extrémités supérieures (17) des bretelles (16, 18) jusqu'au bord extérieur (30) du dispositif de support (10).

3. Batterie selon la revendication 1,
**caractérisée en ce que** la ligne (5, 5', 5") est fixée à la plaque dorsale (6) entre l'ouverture (40) et le bord extérieur (30) du dispositif de support (10) à l'aide d'un élément de fixation (32).

4. Batterie selon la revendication 1,
**caractérisée en ce que** la ligne (5, 5', 5"), entre des rembourrages (41, 42) de la plaque dorsale (6), est amenée jusqu'au bord extérieur (30) du dispositif de support (10).

5. Batterie selon la revendication 1,
**caractérisée en ce que** le bord extérieur (30) du dispositif de support (10) est formé par le bord de la plaque dorsale (6).

6. Batterie selon la revendication 1,
**caractérisée en ce que** le bord extérieur (30) du dispositif de support (10) est formé par le côté (37) d'une bretelle (16, 18) opposé à la plaque dorsale (6).

7. Batterie selon la revendication 1,
**caractérisée en ce que** la plaque dorsale (6) dépasse des bords latéraux du boîtier de batterie (2).

8. Batterie selon la revendication 1,
**caractérisée en ce que** l'élément de fixation (35) est conçu comme une boucle à fermer par une fermeture auto-agrippante.

9. Batterie selon la revendication 1,
**caractérisée en ce que** sur la plaque dorsale (6) est fixé un capot (50) qui reçoit le boîtier de batterie (2).

10. Batterie selon la revendication 9,
**caractérisée en ce que** le capot (50) est ouvert à son extrémité inférieure (49) voisine de la partie pour le dos (9)

11. Batterie selon la revendication 9,
**caractérisée en ce que** le capot (50) se compose d'un matériau flexible hydrophobe.

12. Batterie selon la revendication 9,
**caractérisée en ce que** le capot (50) est fixé à la plaque dorsale (6) par l'intermédiaire d'une fermeture hydrophobe (51) amovible (51).
